(19) Europäisches Patentamt
European Patent Office
Office européen des brevets

(11) EP 1 115 194 A2

(12) # EUROPEAN PATENT APPLICATION

(43) Date of publication:
**11.07.2001 Bulletin 2001/28**

(51) Int Cl.[7]: **H02K 7/09**

(21) Application number: **01300019.5**

(22) Date of filing: **03.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.01.2000 JP 2000000377**

(71) Applicant: **SANKYO SEIKI MFG. CO. LTD.**
**Suwa-gun, Nagano-ken 393-8511 (JP)**

(72) Inventor: **Kanebako, Hideki, c/o Sankyo Seiki Mfg. Co., Ltd**
**Nagano-ken 393-8511 (JP)**

(74) Representative: **Holmes, Matthew Peter et al**
**MARKS & CLERK,**
**Sussex House,**
**83-85 Mosley Street**
**Manchester M2 3LG (GB)**

(54) **Magnetic levitation motor and method for manufacturing the same**

(57) A magnetic levitation motor includes a rotor and a stator disposed opposite to the rotor. The rotor has a main body formed from a magnetic member and a permanent magnet attached to a peripheral surface of the main body. The stator has a first stator winding that generates a levitation control magnetic flux for controllably levitating the rotator body, a second stator winding that generates a rotation magnetic flux for rotating the rotator body and a stator core having the first stator winding and the second stator winding. A direct current magnetic field generation device is provided to generate a magnetic flux radially spreading from the rotor to the stator. The stator core is formed from a plurality of individual stator core sections. Each of the individual stator core sections has a base section and a salient pole section extending from a central section of the base section. The first winding and the second winding are wound around the salient pole section of each of the individual stator core sections. Then, the stator core sections are joined together to form the stator core.

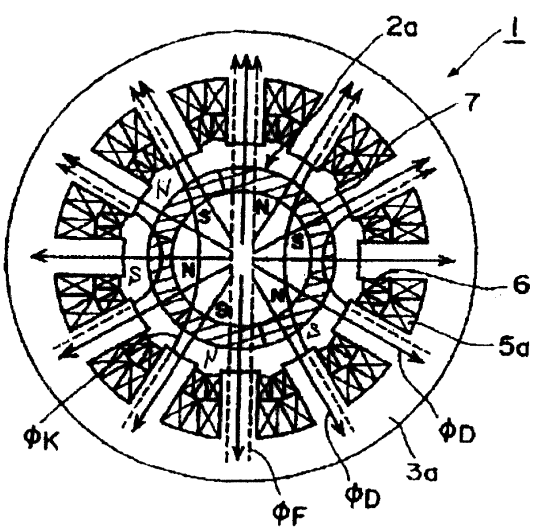


Fig. 1

EP 1 115 194 A2

## Description

### BACKGROUND OF THE INVENTION

1. Field of the Invention

The present invention relates to a magnetic levitation motor having a stator winding for controllably levitating a rotor and another stator winding for generating a rotation magnetic flux, and a method for manufacturing the same.

2. Description of Related Art

Contact-type bearings are widely used. In addition, non-contact type magnetic bearings are also gaining popularity. A typical magnetic bearing uses a magnetic force to levitate a rotor member such as a rotor shaft and supports the rotor member in a non-contact manner. By the use of the magnetic bearing, the coefficient of friction of the bearing section becomes substantially zero (0), which makes a high-speed rotation possible. Also, the magnetic bearing does not need lubrication oil. This allows the use of the magnetic bearing under special conditions. For example, the magnetic bearing can be used at a high temperature or a low temperature, in vacuum and the like. Furthermore, no maintenance work is required. Accordingly, magnetic bearings are used to support rotors in motors.

A motor with magnetic bearing basically has a structure in which a magnetic bearing, a motor section that is a system for generating a rotation force and a magnetic bearing are disposed in this order in an axial direction of a rotor shaft. However, in this structure, the magnetic bearings are disposed on both sides of the motor section, and therefore the length of the rotor shaft increases; and the critical speed of the shaft lowers.

In view of the fact that the stator of a magnetic bearing has a structure substantially similar to that of a stator of an AC motor, magnetic levitation motors in which magnetic bearings and a motor are formed in one piece have been proposed. One type of magnetic levitation motor is a hybrid magnetic levitation motor. The hybrid magnetic levitation motor uses a permanent magnet to form a constant magnetic flux that radially spreads from within a rotor to the side of a stator, so that the rotor is controllably levitated by two-pole direct current magnetic fields, in a similar manner as a typical magnetic bearing. The hybrid magnetic levitation motor can form a constant magnetic flux by the permanent magnet, and therefore can generate a bias attraction force without consuming electric power, which provides an advantage in that an electromagnet used therein can take charge of only the controlling force.

However, in the magnetic levitation motor described above, two different types of windings for generating a rotation torque and for generating levitation force need to be provided. In addition, the two types of windings need to provide on many salient poles, and winding works are complicated. In particular, in the case of a stator for an inner rotor type magnetic levitation motor, gaps between tips of the salient poles are narrow, which makes the winding work more difficult and makes it more difficult to increase the line occupancy factor.

Also, a stator of a magnetic bearing that is used with a magnetic levitation motor has the same problems as described above. Namely, the wiring work is difficult, and the magnetic bearing has a characteristic problem in which interference between the magnetic poles occurs. Due to this problem, magnetic fluxes that are required to generate levitation force extend around the adjacent salient poles, and prevent generation of a required levitation force.

### SUMMARY OF THE INVENTION

It is an object of the present invention to solve the problems of the conventional technology described above. It is also an object of the present invention to provide a magnetic levitation motor having a structure that facilitates the winding work.

In accordance with one embodiment of the present invention, a magnetic levitation motor includes a magnetic levitation motor section having a rotor and a stator disposed opposite to the rotor. The rotor has a main body formed from a magnetic member and a permanent magnet attached to a peripheral surface of the main body. The stator has a first stator winding that generates a levitation control magnetic flux for controllably levitating the rotator body, a second stator winding that generates a rotation magnetic flux for rotating the rotator body and a first stator core having the first stator winding and the second stator winding. A direct current magnetic field generation device is provided to generate a magnetic flux radially spreading from the rotor to the stator. The first stator core is formed from a plurality of individual stator core sections. Each of the individual stator core sections has a base section and a salient pole section extending from a central section of the base section.

Before the stator core sections are joined together to form the first stator core, the first winding and the second winding are wound around the salient pole section of each of the individual stator core sections. As a result, the winding work is substantially facilitated.

In accordance with another embodiment of the present invention, a magnetic levitation motor has two of the

magnetic levitation motor sections, in which two of the first stator cores are disposed in parallel with each other in the axial direction. As a result, the motor output is increased.

In accordance with another embodiment of the present invention, the magnetic levitation motor may further include a magnetic bearing section having a second stator core disposed about an external periphery of the rotator body and a first stator winding wound around the second stator core for generating a magnetic flux for supporting the rotator body. The second stator core is formed from a plurality of stator core sections. Each of the stator core sections has a base section and a salient pole section extending from a central section of the base section. The first winding is wound around the salient pole section of each of the stator core sections, and the base section has a side face having a non-magnetic section. In one embodiment, the non-magnetic section may be formed from a cut formed in the side face of the base section or a non-magnetic material attached to the side face of the base section.

In accordance with one embodiment of the present invention, the second stator core is formed from a circular ring section and a plurality of salient poles radially extending toward a center of rotation from the circular ring section. The base section of the stator core section has abutting side faces. The abutting side faces of the base sections of a plurality of the stator core sections are connected together to form the circular ring section of the second stator core, and the non-magnetic section is disposed in every other one of the abutting end faces between the base sections. As a result, a magnetic bearing can be provided independently of a magnetic levitation motor. The second stator core in the magnetic bearing section prevents interference among levitation control magnetic fluxes. As a consequence, magnetic fluxes that hinder the generation of magnetic levitation force are reduced, and the magnetic levitation force is effectively obtained.

In accordance with another embodiment, the direct current magnetic field generation device may be disposed on the stator. Also, the direct current magnetic field generation device may be formed from segmented permanent magnets affixed on the peripheral surface of the rotor.

Other features and advantages of the invention will be apparent from the following detailed description, taken in conjunction with the accompanying drawings that illustrate, by way of example, various features of embodiments of the invention.

## BRIEF DESCRIPTON OF THE DRAWINGS

Fig. 1 shows a transverse cross section of a magnetic levitation motor section to describe the principle of levitation in a magnetic levitation motor.

Fig. 2 schematically shows a vertical cross section of the magnetic levitation motor shown in Fig. 1.

Fig. 3 shows an illustration of a system of coordinates of the magnetic levitation motor shown in Fig. 1.

Fig. 4 (a) shows the relation between time and magnetic flux density of a bias magnetic flux generated by permanent magnets of a rotor and a direct current magnetic field generation device.

Fig. 4 (b) shows the relation between time and magnetic flux density of a magnetic flux generated by a second stator winding between the stator and the rotor.

Fig. 4 (c) shows the relation between time and magnetic flux density of a magnetic flux generated by a first stator winding.

Fig. 5 shows a vertical cross section of a motor section of a magnetic levitation motor in accordance with one embodiment of the present invention.

Fig. 6 shows a front view of a divided core section of a stator core in the embodiment of Fig. 5.

Fig. 7 shows a cross section of a magnetic bearing section in the embodiment of Fig. 5.

Fig. 8 shows a cross section of a magnetic bearing section in accordance with another embodiment of the present invention.

Fig. 9 shows a cross section of a magnetic bearing section in accordance with another embodiment of the present invention.

Fig. 10 shows a cross section of a magnetic bearing section in accordance with still another embodiment of the present invention.

Fig. 11 shows a vertical cross section of a magnetic levitation motor in accordance with another embodiment of the present invention.

Fig. 12 (a) shows a transverse cross section of a magnetic levitation motor section on one side of a magnetic levitation motor in accordance with another embodiment of the present invention, and Fig. 12 (b) shows a transverse cross section of a magnetic levitation motor section on the other side.

Fig. 13 (a) shows a transverse cross section of a magnetic levitation motor section on one side of a magnetic levitation motor in accordance with still another embodiment of the present invention, and Fig. 13 (b) shows a transverse cross section of a magnetic levitation motor section on the other side.

DESCRIPTION OF PREFERRED EMBODIMENTS

Magnetic levitation motors in accordance with various embodiments of the present invention are described below with reference to the accompanying drawings. First, a basic structure of a hybrid magnetic levitation motor and a principle of levitation will be described.

Figs. 1 and 2 show a magnetic levitation motor 1 having rotors 2a and 2b, stators 3a and 3b disposed opposing to and around the external periphery of the rotors 2a and 2b, a direct current magnetic field generation device 4 that generates a magnetic flux spreading in a radial direction from the rotor 2a to the stator 3a, first stator windings 5a and 5b that generates a levitation control magnetic flux for controllably levitating the rotor, a second stator winding 6 for generating a rotation force acting on the rotor, and a plurality of permanent magnets 7 provided on the rotor 2a. A motor and a magnetic bearing are formed between the rotor 2a equipped with the permanent magnet 7 and the stator 3a. Also, magnetic bearings are formed between the rotor 2a and the stator 3a.

The rotors 2a and 2b are formed from main body sections composed of a magnetic material, and provided on a rotor shaft 8 composed of a magnetic material at locations spaced a specified distance from one another. The main body sections forming the rotors 2a and 2b and the rotor shaft 8 are both formed from a magnetic material. Therefore, the main body sections composing the rotors 2a and 2b also define part of the rotor shaft 8. Among the rotors 2a and 2b, the plural permanent magnets 7are disposed around a peripheral surface of the rotor 2a in a manner that their magnetic polarities are alternately inverted (i.e., N, S, N, S,...) along a direction of the periphery of the rotor 2a. The permanent magnets 7 include permanent magnets with N-polarities being exposed on their surfaces and permanent magnets with S-polarities being exposed on their surfaces that are alternately disposed. The rotors 2a and 2b may preferably be formed from stacked silicon steel plates in order to prevent eddy currents.

The stators 3a and 3b are disposed adjacent to external peripheral surface of the rotors 2a and 2b in a manner to encircle the peripheral surfaces of the rotors 2a and 2b, respectively. First stator windings 5a and 5b are wound around the stators 3a and 3b, respectively, to generate two-pole levitation control magnetic fluxes I F to controllably levitate the rotors 2a and 2b. A second stator winding 6 is provided on the stator 3a adjacent to the first stator winding 5a to provide a rotation magnetic field I K for the rotor 2a.

The direct current magnetic field generation device 4 is provided between the stators 3a and 3b. The direct current magnetic field generation device 4 generates a magnetic flux I D that is radially distributed and oriented from the rotors 2a and 2b to the stators 3a and 3b. In one embodiment, the direct current magnetic field generation device 4 is formed from permanent magnets P that are disposed in a central area between the stators 3a and 3b. The permanent magnets P generate direct current bias magnetic fields between the rotors 2a and 2b and the stators 3a and 3b. The number of the permanent magnets P that function as the direct current magnetic field generation device 4 for generating the bias magnetic fluxes is not particularly restricted. However, the greater the number of bias magnetic fluxes within the gap, the more the required levitation current is reduced. Accordingly, the number of the permanent magnets P may preferably be increased as many as possible. The stators 3a and 3b may also be formed from stacked silicon steel plates.

The number of the magnetic poles of the rotor 2a and the number of slots of the stator 3a are not particularly restricted. Any number of the magnetic poles or the slots may be acceptable to the extent that they can compose a PM motor. However, in a preferred embodiment, the number of the magnetic poles may be 6 or more, and the number of the slots may be 9 or more. In the embodiment shown in the figure, six (6) magnetic poles and twelve (12) slots are provided. In an alternative embodiment, the PM motor described above may have a stator with a slot-less structure.

Operations of the magnetic levitation motor will be described with reference to Figs. 1 and 2 and Figs. 3 and 4.

Fig. 3 shows a system of coordinates of the rotor. In Fig. 3, a rotation center of the stators 3a and 3b is defined at 0, a horizontal axis is defined as an x-axis and a vertical axis perpendicular to the x-axis is defined as a y-axis. When a rotary coordinate fixed on the stators 3a and 3b is T, the angular speed of the rotors 2a and 2b is Z, and time is t, each of the stators 3a and 3b is disposed at an angular speed T from the y-axis. When the y-axis is set at time t = 0, the position of the rotors 2a and 2b after t seconds is obtained by a formula ZtεM.

Figs. 4 (a) - 4 (c) show relations between magnetic fluxes of the stators and the rotors and time. Fig. 4 (a) shows time-wise changes in the magnetic flux density Br of the bias magnetic flux generated by the permanent magnets of the rotors and the direct current magnetic field generation device. Fig. 4 (b) shows time-wise changes in the magnetic flux density Bsm generated by the second stator winding in the gap between the stators and the rotors. Fig. 4 (c) shows time-wise changes in the magnetic flux density Bsb generated by the first stator winding.

In the magnetic levitation motor 1, current is conducted through the first stator windings 5a and 5b for generating a levitation force so that magnetic fields are created by the first stator windings 5a and 5b in a manner shown in Fig. 4 (c). Also, current is conducted through the second stator winding 6 for generating a rotation force so that magnetic fields are created by the second stator winding 6 in a manner shown in Fig. 4 (b). As a result, the magnetic levitation motor 1 magnetically floats and rotates as a motor.

In this manner, current is conducted through the first stator windings 5a and 5b to generate the magnetic flux

density Bsb, and current is conducted through the second stator winding 6 to generate the magnetic flux density Bam, to thereby create a magnetic levitation and a rotation independently from one another. The generation of independent magnetic levitation and rotation forces is logically analyzed. In order to make the logical analysis, the following assumptions (1) through (6) are made.

(1) Electric current is continuously distributed along the stators 3a and 3b.
(2) The motor is in a constant rotation and under a constant thrust load (the gravity and the like).
(3) The rotor 2a forms a magnetic flux density having a rectangular waveform by the permanent magnets, and this magnetic flux density does not cause an eccentric force.
(4) The center of the rotors 2a and 2b concurs with the center of the stators 3a and 3b without an eccentricity.
(5) The bias magnetic flux is constant and radially distributed.
(6) The current conducted through the second stator winding 6 for generating a rotation magnetic field does not cause any armature counter action.

Under the assumptions described above, the magnetic flux density Br by the bias magnetic flux generated by the rotor 2a and the permanent magnets 7 is given by Formula 1 as follows:

[Formula 1]

$$Br \quad \begin{matrix} B_0 \quad B_1 \\ \leftrightarrow \\ \leftrightarrow \therefore (\frac{Z\,t}{M} \quad \frac{2\Sigma\, i \quad 1}{M} \quad \frac{\Sigma}{2M} \sim \frac{Z\,t}{M} \quad \frac{2\Sigma\, i \quad 1}{M} \quad \frac{\Sigma}{2M}) \\ \leftrightarrow \\ \leftarrow B_0 \quad B_1 \\ \leftrightarrow \\ \leftrightarrow \therefore (\frac{Z\,t}{M} \quad \frac{2\Sigma\, i \quad 1}{M} \quad \frac{\Sigma}{2M} \sim \frac{Z\,t}{M} \quad \frac{2\Sigma\, i \quad 1}{M} \quad \frac{\Sigma}{2M}) \\ \leftarrow \end{matrix}$$

Where,

$B_0$ : Gap magnetic flux density by the bias magnets
$B_1$ : Wave height of the magnetic flux density by the permanent magnet of the rotor
$B_2$ : Wave height of the magnetic flux density by the motor winding
$B_3$ : Wave height of the magnetic flux density by a position control winding
T : Rotary coordinate of the magnetic flux density by a position control winding
$\therefore$ : Phase difference between the magnetic flux by the armature winding and the rotor
I : Phase angle of the magnetic flux by the position control winding
Z : Angular speed of the rotor
t : Time
M : Pole pair number (=1, 2, 3, ...)
i : Natural number

**[0043]** To simplify the calculation, the curve of the magnetic flux density Br is assimilated to a sine wave. As a result, the magnetic flux density Br can be presented by Formula 2 as follows:

[Formula 2] $$Br = B_0 + B_1 \cos (MT\ Zt)$$

The magnetic flux density Bsm generated by the second stator winding 6 between the rotor 2a and the stator 3a is given by Formula 3 as follows:

[Formula 3] $$Bms = B_2 \cos (MT\ Zt\ \therefore)$$

The magnetic flux density Bsb generated by the first stator windings 5a and 5b is given by Formula 4 as follows:

[Formula 4] $Bsb = B_3 \cos (T\ I)$

Therefore, the magnetic flux density Bg that is generated in air gaps between the rotors 2a and 2b and the stators 3a and 3b is given by Formula 5 as follows:

[Formula 5] $Bg = Br + Bsm + Bsb$

When the radius of the rotors 2a and 2b is r, an air gap between the rotors 2a and 2b and the stators 3a and 3b is g, the axial length of each of the rotors 2a and 2b is 1, and a minute angle is dT, a minute volume ∍ V of the air gap is given by Formula 6 as follows:

[Formula 6] $\ni V = r\ l\ g\ dT$

Magnetic energy ∍ W stored in the minute volume ∍ V is given by Formula 7 as follows:

[Formula 7] $$\ni W \frac{B_g^2}{2\Pi_0} \ni V \frac{B_g^2}{2\Pi_0} r\, lg\, dT$$

Accordingly, a radial force dF along the radial direction is given by Formula 8 below with a virtual displacement of the magnetic energy stored in the minute volume of the gap:

[Formula 8] $$dF \frac{\omega \ni W}{\omega g} \frac{B_g^2}{2\Pi_0} rl dT$$

Forces Fx and Fy generated along the x-axis and the y-axis are calculated by Formula 9 and Formula 10 presented below, respectively, by integrating an x-direction component and a y-direction component of the force dF in Formula 8 along the entire periphery of the gap for a given value of T.

[Formula 9]

$$Fx \quad \geq dF \cos T$$

$$\geq_{0}^{2\Sigma} \frac{B_g^2}{2\Pi_0} rl \cos T dT$$

$$\frac{lr}{2\Pi_0} \spadesuit \frac{B_0 B_1}{2} \Leftrightarrow \geq_{0}^{2\Sigma} \cos\{(M \quad 1)T \quad Zt\} dT$$

$$\frac{B_0 B_1}{2} \geq_{0}^{2\Sigma} \cos\{(M \quad 1)T \quad (Zt \quad \therefore)\} dT$$

$$2 B_0 B_3 \Sigma \cos I$$

$$\frac{B_1 B_3}{2} \geq_{0}^{2\Sigma} \cos\{(M \quad 2)T \quad (Zt \quad I)\} dT$$

$$\frac{B_2 B_3}{2} \geq_{0}^{2\Sigma} \cos\{(M \quad 2)T \quad (Zt \quad \therefore) \quad I\} dT \; \Xi$$

[Formula 10]

$$Fy \quad \geq_{\theta}^{2\Sigma} \frac{1}{2\Pi b} B_g^2 rl \sin T dT$$

$$\frac{lr}{2\Pi b} \frac{B_0 B_1}{2} \geq_{\theta}^{2\Sigma} \sin\{(1 \quad M)T \quad Zt\} dT$$

$$\frac{B_0 B_1}{2} \geq_{\theta}^{2\Sigma} \sin\{(1 \quad M)T \quad (Zt \quad \therefore)\} dT$$

$$2 B_0 B_3 \Sigma \sin l$$

$$\frac{B_1 B_3}{2} \geq_{\theta}^{2\Sigma} \sin\{(2 \quad M)T \quad Zt \quad l\} dT$$

$$\frac{B_2 B_3}{2} \geq_{\theta}^{2\Sigma} \cos\{(2 \quad M)T \quad (Zt \quad \therefore) \quad l\} dT \;\Xi$$

When M τ 3, *Fx and Fy* are given by Formula 11 and Formula 12, respectively, as follows:

[Formula 11] $$Fx \; \frac{B_0 B_3 lr\Sigma}{\Pi_0} \cos(l)$$

[Formula 12] $$Fy \; \frac{B_0 B_3 lr\Sigma}{\Pi_0} \sin(l)$$

Accordingly, it is understood that, without regard to the rotation angle of the rotors 2a and 2b, a constant levitation force is obtained. The levitation force in the x-direction in Formula 11, the levitation force in they-direction in Formula 12 and the magnetic flux density of the permanent magnet of the rotor 2a do not contain a member of the magnetic flux density by the second stator winding 6 for generating a rotation magnetic field. Accordingly, it is understood that the magnetic levitation force is not influenced by the rotation magnetic field that is formed by the second stator winding 6.

On the other hand, a rotation torque T is given by Formula 13 as follows:

[Formula 13]

$$T \quad \geq_{\theta}^{2\Sigma} \frac{T\text{э} W}{\omega \therefore}$$

$$\frac{r\, lg\, M B_1 B_2 \Sigma}{\Pi b} \sin M \therefore$$

$$\frac{r\, lg\, M B_1 B_2}{2\Pi b} \geq_{\theta}^{2\Sigma} \sin\{(M \quad 1)T$$

$$M(Zt \quad \therefore) \quad l\} dT$$

When M τ 2, the rotation torque T is given by Formula 14 as follows:

[Formula 14] $$T \frac{rlgMB_1B_2\Sigma}{\Pi_0} \sin M \therefore$$

Accordingly, it is understand that the rotation torque T does not contain any member of the air gap magnetic flux density of the bias magnetic field generated by the direct current magnetic field generation device 4, or the magnetic flux density generated by the first stator windings 5a and 5b for generating the magnetic levitation force. Consequently, the rotation torque T is not influenced by the bias magnetic field or the levitation magnetic field.

The magnetic levitation motor described above so far is described and shown in the specification of Japanese Laid-open patent application HEI 10 - 355124 that is filed by the present applicant and has not yet been published. The magnetic levitation motor described above provides the following advantages:

(1) Since the magnetic bearing and the magnetic circuit of the motor are integrally formed, the overall size of the magnetic levitation motor becomes small, and the axial length can be shortened. As a result, the critical speed can be increased and a high speed rotation becomes possible.
(2) The magnetic levitation control is not affected by the load torque or the motor electric current, and a more stabilized levitation can be attained.
(3) The magnetic levitation control is not performed by the rotation magnetic field, and therefore a coordinate conversion is not required and the control system is simplified.
(4) A homopolar type magnetic levitation motor needs at least 8 magnetic salient poles. However, the magnetic levitation motor in accordance with the embodiment described above can be formed with at least 6 magnetic poles, and therefore, the structure is simplified.
(5) Permanent magnets can be used as the direct current magnetic field generation device, and therefore electric power is not required to generate magnetic fields.

In accordance with another embodiment of the present invention, the hybrid magnetic levitation motor described above has stator cores of a modified structure. As a result, the interference between the levitation force and the rotation force is further reduced, and the motor output is increased.

A magnetic levitation motor in accordance with another embodiment of the present invention will be described below with reference to Fig. 5. The magnetic levitation motor generally has a structure similar to the one described above with reference to Figs. 1 through 4. The magnetic levitation motor has a stator core that is different from that of the embodiment shown in Figs. 1 through 4. Accordingly, the structure of the stator core is mainly described below.

Fig. 5 shows a stator core on the motor side (hereafter referred to as a "motor-side stator core") of a magnetic levitation motor. Referring to Fig. 5, a stator 3a is fitted inside the motor case 35. The stator 3a is formed from a plurality of divided core sections that are connected together. Fig. 6 shows one of the divided core sections. Each of the divided core sections includes a base section 37 and a salient pole section 38 extending from a central area of the base section 37. The base sections 37 form a circular section of the stator 3a when connected together. When viewed from front or rear, the divided core section has a T-shape.

In the embodiment shown in Fig. 5, twelve (12) divided core sections are connected together by joining peripheral end faces of the base sections 37 to form a connected stator body. The base sections 37 of the twelve divided core sections form a circular section of the stator 3a. The embodiment shown in Fig. 5 is an inner-rotor type magnetic levitation motor, in which the salient pole sections 38 of the divided core sections are oriented toward the center of rotation. As a result, tip sections of the salient pole sections 38 are very close to one another, and gaps between the adjacent tip sections of the salient pole sections 38 are relatively small. It is noted that a first stator winding and a second stator winding are wound around each of the salient pole section 38 of the motor-side stator core. Therefore, the winding work is difficult in the small gap areas where the tip sections of the salient pole sections 38 are disposed very close to one another. However, in accordance with the embodiment, the stator windings are wound around each of the salient pole sections 38, before the divided core sections are joined together, and then, the divided core sections are joined together to form a connected stator body. As a result, the winding work is substantially facilitated.

A connected stator body of the divided core sections forms the motor-side stator 3a. The motor-side stator 3a is fitted and affixed to the internal surface of the motor case 35. The first stator windings and the second stator winding wound around the respective salient pole sections 38 are connected to form specified circuits. More specifically, as described above with reference to Figs. 1 through 4, the first stator windings are connected in a manner to generate a two-pole levitation control magnetic flux for controllably levitating the rotor, and the second stator windings are connected in a manner to generate a rotation magnetic flux to provide a rotation torque on the rotor.

Fig. 7 shows a stator core on the side of a magnetic bearing (hereafter referred to as a "bearing-side stator core") of the magnetic levitation motor described above with reference to Figs. 1 through 4. Referring to Fig. 7, a bearing-side stator 3b is fitted inside the motor case 35. The stator 3b is formed from a plurality of divided core sections

that are connected together. Each of the divided core sections has the same shape as that of divided core section shown in Fig. 6. The divided core section includes a base section 40 and a salient pole section 41 extending from a central area of the base section 40. The base sections 40 form a circular section of the stator 3b when connected together. The second stator winding is wound around each of the salient pole sections 41 to generate a rotation magnetic flux that works on the rotor.

The bearing-side stator 3b has the same structure as that of the motor-side stator 3a shown in Fig. 5. However, the bearing-side stator core is different from the motor-side stator core in that only the first stator winding for controlling levitation of the rotor is wound around each of the salient pole sections 41 of the bearing-side stator core. In this case, the first stator winding is wound around each of the salient pole sections 41 before the stators 3b are joined together. Then, the stators 3b are connected together to form a connected body of stator core. As a result, the winding work is substantially facilitated.

In the bearing-side stator 3b, two-pole levitation control magnetic fluxes for controllably levitating the rotor are generated by the first stator windings, as shown in Fig. 8. Each of the levitation control magnetic fluxes circulates in each adjacent two of the divided core sections. The magnetic fluxes circulate in the same direction. If the levitation control magnetic flux circulating in one set of the adjacent two divided core sections branches out into another set, the magnetic fluxes may interfere with each other in the salient pole section 41 of the other set. This may hinder the generation of magnetic levitation force. In accordance with the present embodiment, cut sections 8 are provided at specified intervals along the circular section of the stator core 3b. The interference of the magnetic fluxes is prevented because magnetic saturation takes place at the cut sections 8. Preferably, each of the cut sections 8 may be provided in an abutting face of the adjacent two base sections 40. In a preferred embodiment, the cut section 8 may be formed in every other one of the abutting faces between the adjacent base sections 40 of the divided core sections, in a manner that the cut section 8 does not exist in the path of the two-pole levitation control magnetic flux.

In the embodiment shown in Fig. 8, the cut section 8 are formed in the abutting faces between the adjacent base sections 40 of the divided core sections to cause magnetic saturation at the cut sections 8. As a result, the interference of the levitation control magnetic fluxes is prevented, and magnetic fluxes that hinder the generation of the magnetic levitation force are reduced, with the result that the levitation force is effectively attained.

Fig. 9 shows a stator core in according with another embodiment of the present invention, which prevents the interference of the levitation control magnetic fluxes. Divided core sections shown in Fig. 9 have basically the same structure as that of the divided core sections shown in Fig. 8. However, the divided core sections of Fig. 9 are different from that shown in Fig. 8 in that non-magnetic material members 9 are interposed between the divided core sections of Fig. 9 to prevent the interference of the levitation control magnetic fluxes. As shown in Fig. 9, the non-magnetic member 9 is provided in every other one of the abutting faces between the adjacent base sections 40 of the divided core sections. The embodiment shown in Fig. 9 provides the same effects obtained by the embodiment shown in Fig. 8.

In the embodiments shown in Figs. 8 and 9, each of the divided core sections is asymmetrical about the salient pole section, as viewed from the front or the rear thereof. For example, the base section is not symmetrical about the salient pole section. More particularly, the length of one side of the base section of the divided core section extending from the salient pole section is different from the other side thereof. Also, one divided core section has a different configuration from the next divided core section. Therefore, two different types of divided core sections need to be prepared. In contrast, in the embodiment shown in Fig. 10, the stator core may be formed from divided core sections having an identical configuration. In one embodiment, the non-magnetic material members 9 and the magnetic material members 10 are provided in a manner that each of the non-magnetic material members 9 is provided at one end of the base section of one divided core section and each of the magnetic material members 10 is provided at the other end of the base section thereof. Stated otherwise, a non-magnetic material member 9 is provided between one end of the base section of one divided core section and one end of the base section of an adjacent divided core section on one side, and a magnetic material member 10 is provided between the other end of the base section thereof and one end of the base section of another adjacent divided core section on the other side. As a result, all of the divided core sections can have the same configuration, and thus only one type of divided core section may be needed.

In the embodiments described above with reference to Figs. 1 through 4, a motor section equipped with a magnetic bearing and a magnetic bearing section are provided in parallel with each other in the axial direction. Therefore, in view of the stator cores thereof, the motor-side stator core and the bearing-side stator core are disposed in parallel with each other in the axial direction. In accordance with another embodiment, two motor sections each equipped with a magnetic bearing can be disposed in parallel with each other in the axial direction. In other words, two motor-side stator cores can be disposed in parallel with each other in the axial direction. A magnetic levitation motor having two motor-side stator cores in one embodiment of the present invention is shown in Fig. 11.

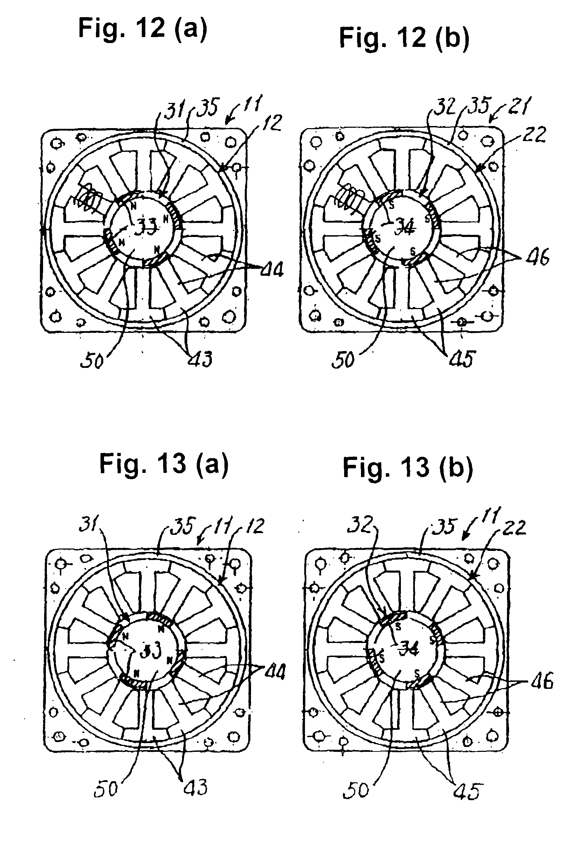

As shown in Figs. 11 and 12, the magnetic levitation motor has a cylindrical motor case 35. Two magnetic levitation motor sections formed from two stator core sections 11 and 21 and two rotors 31 and 32 are disposed within the cylindrical motor case 35. The two stator core sections 11 and 21 have stator cores 12 and 22, and stator windings 12 and 23, respectively. The stator cores 12 and 22 are formed from stacks of layers having the same structure. The

stator cores 12 and 22 may preferably be formed from stacked silicon steel plates. In the embodiment shown in Fig. 12, each of the stator cores 12 and 22 is formed from a connected body of twelve divided core sections, and has substantially the same structure as that of the divided core section described with reference to Fig. 6. The stator cores 12 and 22 have base sections 43 and 45 and salient pole sections 44 and 46 extending from central sections of the respective base sections 43 and 45, respectively. The stator cores 12 and 22, each being formed from a connected body of the divided core sections, are affixed to an internal surface of the motor case 35.

A stator winding 13 and a stator winding 23 are wound around each of the salient pole sections 44 and 46 of the respective stator cores 12 and 22, respectively. Each of the stator windings 13 and 23 includes a first stator winding (not shown) that generates a two-pole levitation control magnetic flux for controllably levitating each of the rotors 31 and 32, and a second stator winding (not shown) that generates a rotation magnetic field with respect to each of the rotors 31 and 32.

The two rotors 31 and 32 are disposed on a common rotator body 50 in the shape of a shaft at different locations in an axial direction of the common rotator body 50. The two rotors 31 and 32 form two magnetic levitation motor sections 11 and 21 disposed in the axial direction and spaced a distance from one another. The rotator body 50 that form each of the rotors 31 and 32 is formed from a magnetic material. Segmented-type permanent magnets 33 and 34 are affixed to external peripheral surfaces of the rotors 31 and 32, respectively. In the embodiment shown in Fig. 12, each of the segmented-type permanent magnets 33 and 34 is composed of four segments of permanent magnets divided from a cylindrical permanent magnet. The segmented permanent magnets 33 and 34 are disposed at equal intervals along the peripheral direction of the rotator body 50, and spaced a distance from the internal surfaces of the salient poles of the stator cores 12 and 22. The segmented permanent magnets 33 and 34 are disposed opposite to the internal surfaces of the salient poles of the stator cores 12 and 22.

The segmented permanent magnets 33 and 34 are affixed in the two magnetic levitation motor sections 11 and 21 in a manner to have mutually opposite magnetic polarities. In the embodiment shown in Fig. 11, surfaces of the segmented permanent magnets 33 that face to the stator core 12 on one side, i.e., on the left-hand side, have an S-pole and surfaces thereof that face to the rotator body 50 has an N-pole (only the N-pole is shown in the figure). On the other side, i.e., on the right-hand side, surfaces of the segmented permanent magnets 34 that face to the stator core 22 have an N-pole and surfaces thereof that face to the rotator body 50 has an S-pole (only the S-ple is shown). Therefore, a magnetic flux that goes out from the internal periphery of the segmented permanent magnets 33 passes the rotator body 50 made of a magnetic material and enters the other segmented permanent magnets 34. A magnetic flux that goes out from the outer periphery of the segmented permanent magnets 34 passes the gap between the segmented permanent magnets 34 and the stator core 22 and enters the stator core 22, the motor case 35, the other stator core 12, the gap between the stator core 12 and the segmented permanent magnets 33, and returns to the segmented permanent magnets 33.

The two sets of segmented permanent magnets 33 and 34 work in association with the rotation magnetic fields generated by the second stator windings to thereby generate magnetic fluxes that create a rotation force to the rotors 31 and 32 in the same direction. Also, the two sets of segmented permanent magnets 33 and 34 function as bias magnets. In other words, the two sets of segmented permanent magnets 33 and 34 work in association with the two-pole levitation control magnetic fluxes generated by the first stator windings to thereby generate direct current magnetic fields spreading in a radial direction of the rotors 31 and 32 for controllably levitating the rotors 31 and 32, respectively.

The rotation force and the levitation force are generated according to the same principles as those described with reference to Figs. 1 through 4, and therefore, the description thereof is omitted.

In the embodiment shown in Fig. 12, each of the stator cores 12 and 22 is formed from a connected body of divided core sections. Each of the divided core section of the stator core 12 has a base section 43 that forms a segment of a circular section of the stator core 12 and a salient pole section 44 extending from a central area of the base section 43. Also, each of the divided core sections of the stator core 22 has a base section 45 that forms a segment of a circular section of the stator core 22 and a salient pole section 46 extending from a central area of the base section 45. A first stator winding and a second stator winding are wound around each of the salient pole sections 44 and 46. Accordingly, even in the case of the inner-rotor type magnetic levitation motor, windings are provided on each of the individual divided core sections before the divided core sections are joined together. As a result, the winding work is facilitated.

Also in accordance with the embodiment described above, the segmented permanent magnets 33 and 34 are affixed to the peripheral surfaces of the two rotors 31 and 32 in a manner to have mutually opposite magnetic polarities. The segmented permanent magnets 33 and 34 are therefore used to function as permanent magnets that generate a rotation force, and also function as a direct current magnetic field generation device for levitating the rotors 31 and 32. In other words, permanent magnets that exclusively function as a direct current magnetic field generation device for generating levitation force are not required, in addition to the permanent magnets for generating a rotation force. As a result, the number of assembly steps is reduced, the size reduction becomes possible and the manufacturing cost can be lowered.

Referring to Fig. 11, gap sensors 15 and 25 are disposed on both sides of the two magnetic levitation motor sections 11 and 21. The gap sensors 15 and 25 are disposed opposite to detection members that are mounted integrally with the rotator body 50. Currents conducted through the first stator windings for generating levitation force are controlled in a manner that gaps between the gap sensors 15 and 25 and the detection members, which are detected by the gap sensors 15 and 25, are constant. As a result, a rotation section including the rotator body 50 and the rotors 31 and 32 can be supported in a non-contact manner. It is noted that Fig. 11 illustrates that both end sections of the rotator body 50 appear to be supported by bearings provided in the motor case 35. However, while the rotator body 50 is rotating, a magnetic levitation force is generated by conducting currents through the first stator windings for generating levitation force, and the currents are controlled, such that the rotator body 50 rotates without contacting the bearings.

In the embodiment shown in Figs. 12 (a) and 12 (b), the segmented permanent magnets 33 and 34 that are affixed to the two rotors 31 and 32 are disposed at the same angular positions in the rotational direction. However, as shown in Figs. 13 (a) and 13 (b), the segmented permanent magnets 33 and 34 that are affixed to the two rotors 31 and 32 may be disposed offset from one another in the rotational direction. In this case, phases of the currents conducted through the first stator winding and the second stator winding need to be different from the embodiment shown in Figs. 12 (a) and 12 (b), and are offset between the two rotors 31 and 32.

In the embodiments shown in Figs. 11 through 13, each of the stator cores is formed from a connected body of divided core sections. Each of the divided core section has a base section that forms a segment of a circular section of the stator core and a salient pole section extending from a central area of the base section. Accordingly, even in the case of an inner-rotor type magnetic levitation motor, the winding work is readily conducted.

Also, two magnetic levitation motor sections that generate rotation forces and levitation forces are disposed connected together in the axial direction. As a result, the motor output can be increased, and well-balanced levitation forces in the axial direction can be obtained.

It is noted that the present invention is not only applicable to the inner-rotor type motors, but also to outer-rotor type motors. The same effects can be obtained when the present invention is implemented in outer-rotor type motors.

As described above, a magnetic levitation motor includes a magnetic levitation motor section having a rotor and a stator disposed opposite to the rotor. The rotor has a main body formed from a magnetic member and a permanent magnet attached to a peripheral surface of the main body. The stator has a first stator winding that generates a levitation control magnetic flux for controllably levitating the rotator body, a second stator winding that generates a rotation magnetic flux for rotating the rotator body and a first stator core having the first stator winding and the second stator winding. A direct current magnetic field generation device is provided to generate a magnetic flux radially spreading from the rotor to the stator. In one aspect of the present invention, the first stator core is formed from a plurality of individual stator core sections. Each of the individual stator core sections has a base section and a salient pole section extending from a central section of the base section. The first winding and the second winding are wound around the salient pole section of each of the individual stator core sections. Then, the stator core sections are joined together to form the first stator core. As a result, the winding work is substantially facilitated.

In another aspect of the present invention, a magnetic levitation motor has two of the magnetic levitation motor sections, in which two of the first stator cores are disposed in parallel with each other in the axial direction. As a result, the motor output is increased.

In another aspect of the present invention, the magnetic levitation motor may further include a magnetic bearing section having a second stator core disposed about an external periphery of the rotator body and a first stator winding wound around the second stator core for generating a magnetic flux for supporting the rotator body. The second stator core is formed from a plurality of stator core sections. Each of the stator core sections has a base section and a salient pole section extending from a central section of the base section. The first winding is wound around the salient pole section of each of the stator core sections, and the base section has a side face having a non-magnetic section. In one embodiment, the non-magnetic section may be formed from a cut formed in the side face of the base section or a non-magnetic material attached to the side face of the base section.

In accordance with another aspect of the present invention, the second stator core is formed from a circular ring section and a plurality of salient poles radially extending toward a center of rotation from the circular ring section. The base section of the stator core section has abutting side faces. The abutting side faces of the base sections of a plurality of the stator core sections are connected together to form the circular ring section of the second stator core, and the non-magnetic section is disposed in every other one of the abutting end faces between the base sections. The second stator core in the magnetic bearing section prevents interference among levitation control magnetic fluxes. As a consequence, magnetic fluxes that hinder the generation of magnetic levitation force are reduced, and the magnetic levitation force is effectively obtained.

In accordance with another aspect of the present invention, the direct current magnetic field generation device may be formed from segmented permanent magnets affixed on the peripheral surface of the rotor. In this case, an

independent permanent magnet, that exclusively functions as a means to generate a direct current magnetic field for generating levitation force, is not required, besides the permanent magnet for generating a rotational force. As a result, the manufacturing cost is lowered and the motor structure is simplified.

In one aspect of the present invention, a magnetic levitation motor has a stator core formed from a circular ring section and a plurality of salient poles radially extending toward a center of rotation from the circular ring section. The stator core is formed from a plurality of stator core sections, each having a base section and a salient pole section extending from the base section. In one aspect of the present invention, the magnetic levitation motor is manufactured by a method including the steps of winding a first stator winding and a second stator winding about the salient pole section of each of the stator core sections, and then connecting a plurality of the stator core sections to form the stator core. The salient pole sections of the connected stator core sections define the salient poles of the stator core. As a result, the winding work is substantially facilitated and the motor is readily manufactured.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

## Claims

1. A magnetic levitation motor comprising:

   a rotor having a main body formed from a magnetic member and a permanent magnet attached to a peripheral surface of the main body;
   a stator disposed opposite to the rotor, the stator having a first stator winding that generates a levitation control magnetic flux for controllably levitating the rotator body, a second stator winding that generates a rotation magnetic flux for rotating the rotator body and a first stator core having the first stator winding and the second stator winding; and
   a direct current magnetic field generation device that generates a magnetic flux radially spreading from the rotor to the stator,
   wherein the first stator core is formed from a plurality of individual stator core sections, each of the individual stator core sections having a base section and a salient pole section extending from a central section of the base section, wherein the first winding and the second winding are wound around the salient pole section of each of the individual stator core sections.

2. A magnetic levitation motor according to claim 1, wherein the first stator core is formed to a circular ring section and a plurality of salient poles radially extending toward a center of rotation from the circular ring section, and the base section of the stator core section has side faces and a peripheral surface that defines a part of an external periphery of the circular ring section of the first stator core, wherein the side faces of the base sections of a plurality of the stator core sections are connected together to form the circular ring section of the first stator core.

3. A magnetic levitation motor according to claim 2, wherein the salient pole sections of the plurality of the stator core sections define the salient poles of the first stator core, respectively.

4. A magnetic levitation motor comprising:

   a rotator body formed from a magnetic material; and
   two magnetic levitation motor sections each containing a rotor section and a stator section opposite to the rotor section, the two magnetic levitation motor sections disposed in parallel with each other in an axial direction of the rotator body,
   wherein the rotor section has a permanent magnet attached to a peripheral surface the rotator body, the permanent magnet generating a magnetic flux spreading in a radial direction of the rotor section,
   the stator section having a first stator winding that generates a levitation control magnetic flux for controllably levitating the rotator body, a second stator winding that generates a rotation magnetic flux for rotating the rotator body and a first stator core having the first stator winding and the second stator winding, and
   the first stator core is formed from a plurality of stator core sections, each of the stator core sections having

a base section and a salient pole section extending from a central section of the base section, wherein the first winding and the second winding are wound around the salient pole section of each of the stator core sections.

**5.** A magnetic levitation motor according to claim 4, further comprising a cylindrical motor case, wherein the first stator cores of the stator sections in the two magnetic levitation motor sections are attached to an internal peripheral surface of the cylindrical motor case and separated a distance from each other in the axial direction, and the permanent magnets of the rotor sections are formed from two sets of plural segmented permanent magnets, respectively, and separated a distance from each other in the axial direction.

**6.** A magnetic levitation motor according to claim 5, wherein each of the two sets of plural segmented permanent magnets is composed of four permanent magnet segments divided from a cylindrical permanent magnet, the four permanent magnet segments are disposed at equal intervals along a peripheral direction of the rotator body, and the two sets of plural segmented permanent magnets are provided on the rotator body in a manner to have mutually opposite polarities.

**7.** A magnetic levitation motor according to claim 6, further comprising two detection members provided on the rotator body at location interposing the two magnetic levitation motor sections and two gap sensors disposed opposite to the detection members.

**8.** A magnetic levitation motor according to claim 1, further comprising a bearing section having a second stator core disposed about an external periphery of the rotator body and a first stator winding wound around the second stator core for generating the levitation control magnetic flux, the second stator core being spaced a distance from the first stator core in the axial direction,

wherein the second stator core is formed from a plurality of stator core sections, each of the stator core sections having a base section and a salient pole section extending from a central section of the base section, wherein the first winding is wound around the salient pole section of each of the stator core sections, and the base section has a side face having a non-magnetic section.

**9.** A magnetic levitation motor according to claim 8, wherein the non-magnetic section is formed from a cut formed in the side face of the base section.

**10.** A magnetic levitation motor according to claim 8, wherein the non-magnetic section is formed from a non-magnetic material attached to the side face of the base section.

**11.** A magnetic levitation motor according to claim 8, wherein the second stator core is formed from a circular ring section and a plurality of salient poles radially extending toward a center of rotation from the circular ring section, and the base section of the stator core section has abutting side faces, wherein the abutting side faces of the base sections of a plurality of the stator core sections are connected together to form the circular ring section of the second stator core, and the non-magnetic section is disposed in every other one of the abutting end faces between the base sections.

**12.** A magnetic levitation motor according to claim 11, wherein the salient pole sections of the plurality of the stator core sections define the salient poles of the second stator core, respectively.

**13.** A magnetic levitation motor according to claim 1, wherein the direct current magnetic field generation device is provided on the stator.

**14.** A magnetic levitation motor according to claim 1, wherein the direct current magnetic field generation device is formed from a plurality of segmented permanent magnets affixed to a peripheral surface of the rotor.

**15.** A method for manufacturing a magnetic levitation motor, the magnetic levitation motor comprising:

a rotor having a main body formed from a magnetic member and a permanent magnet attached to a peripheral surface of the main body;
a stator disposed opposite to the rotor, the stator having a first stator winding that generates a levitation control magnetic flux for controllably levitating the rotator body, a second stator winding that generates a rotation magnetic flux for rotating the rotator body and a stator core having the first stator winding and the second

stator winding; and
a direct current magnetic field generation device that generates a magnetic flux radially spreading from the rotor to the stator,
the method comprising the steps of:

providing a plurality of individual stator core sections, each of the individual stator core sections having a base section and a salient pole section extending from a central section of the base section;
winding the first winding and the second winding around the salient pole section of each of the individual stator core sections; and
connecting side faces of the base sections of the individual stator core sections to form the stator core.

**16.** A method for manufacturing a magnetic levitation motor according to claim 15, wherein the stator core has a circular ring section and a plurality of salient poles radially extending toward a center of rotation from the circular ring section, the side faces of the base sections of a plurality of the stator core sections are connected together to form the circular ring section of the stator core.

**17.** A method for manufacturing a magnetic levitation motor according to claim 15, wherein, after the first winding and the second winding are wound around the salient pole section of each of the individual stator core sections, side faces of the base sections of the individual stator core sections are connected together to form the stator core, and the stator core is affixed to an internal peripheral surface of a cylindrical motor case.

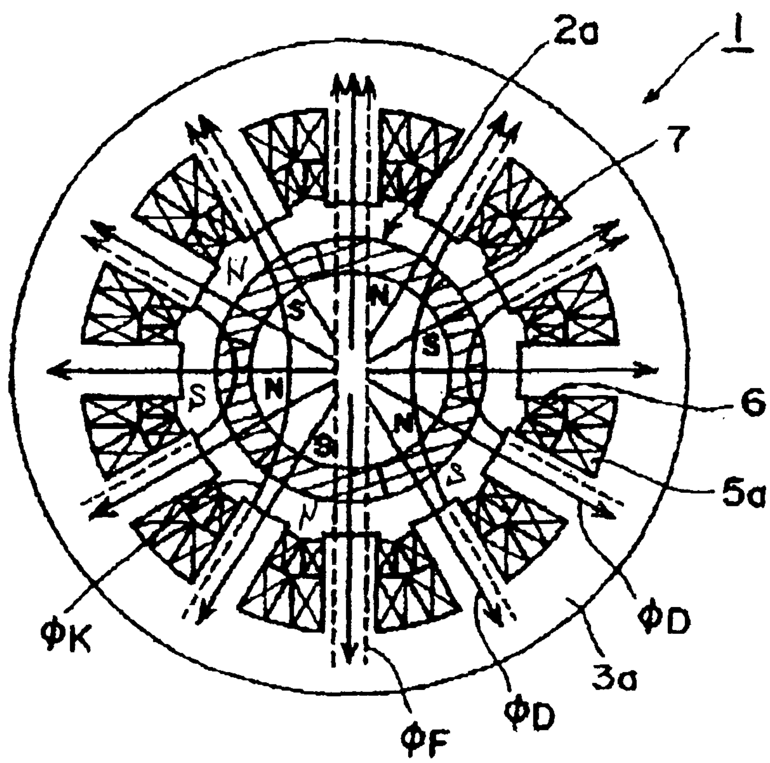


Fig. 1

Fig. 2

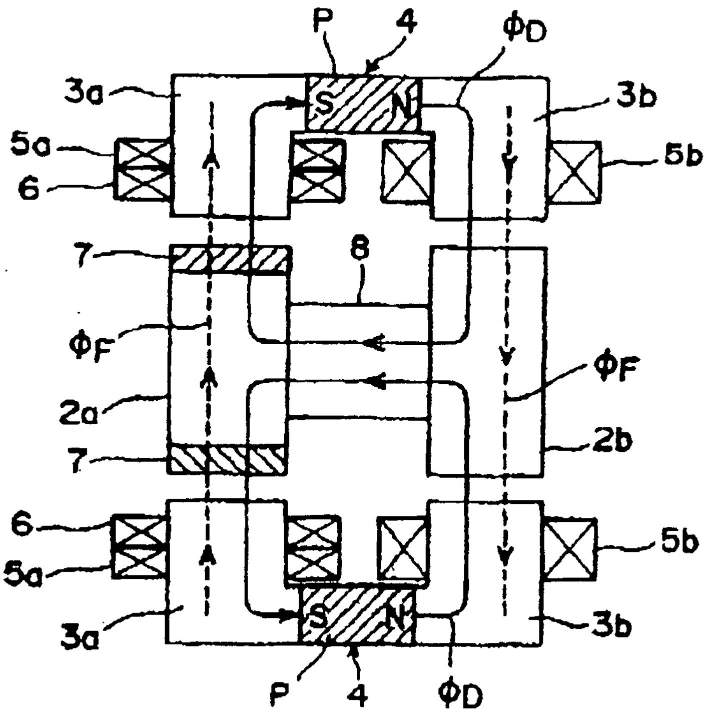
P
4
ΦD
3a
3b
5a
5b
6
S
N
7
8
ΦF
2a
2b
7
6
5b
5a
3a
S
N
3b
P
4
ΦD

Fig. 3

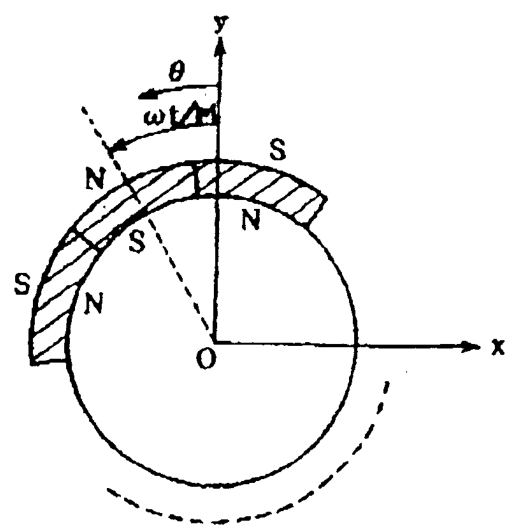
y
θ
ωt/M
S
N
N
S
S
N
O
x

Fig. 4 (a)

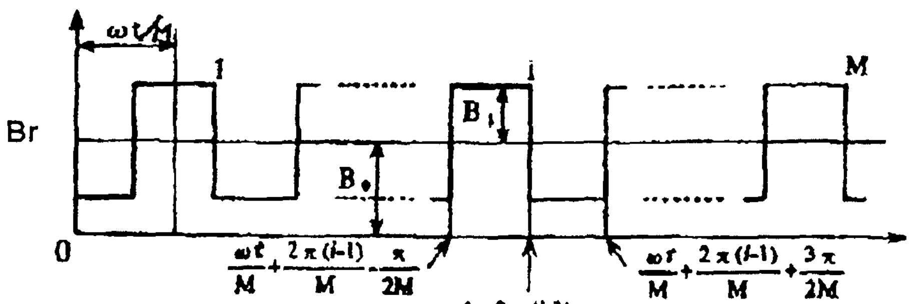


Fig. 4 (b)

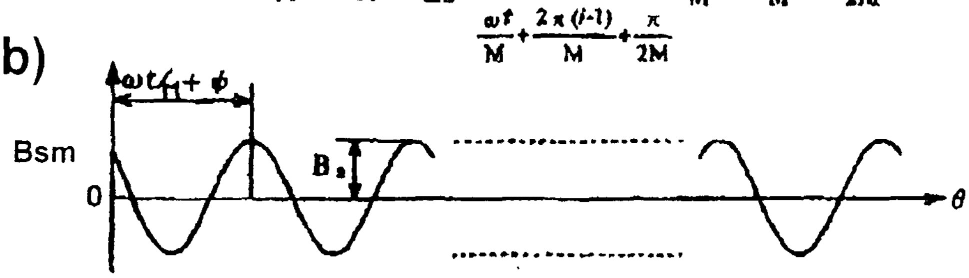


Fig. 4 (c)

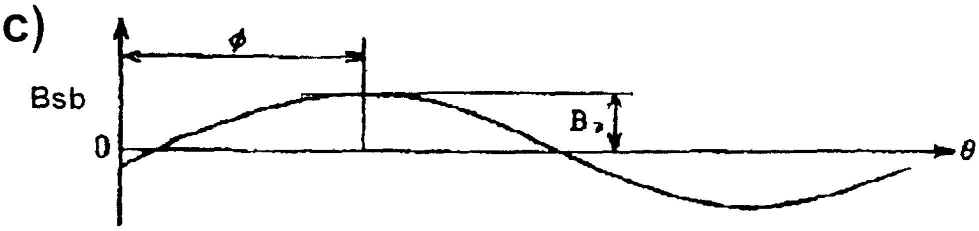

Fig. 5

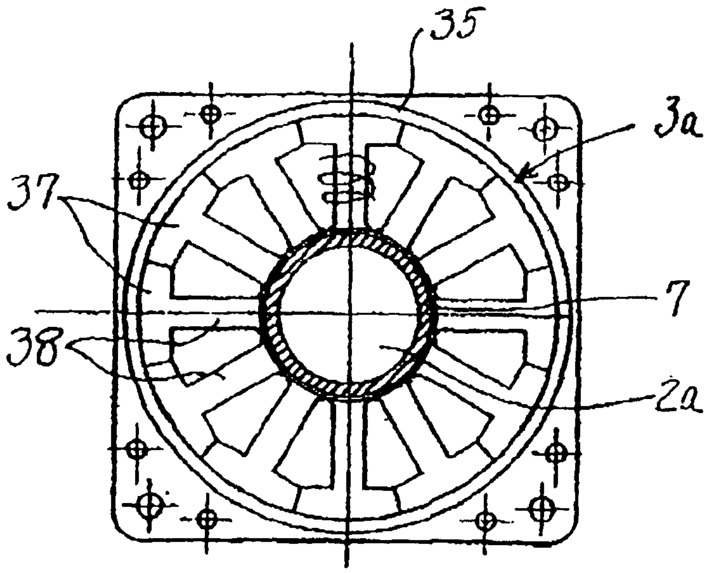


Fig. 6

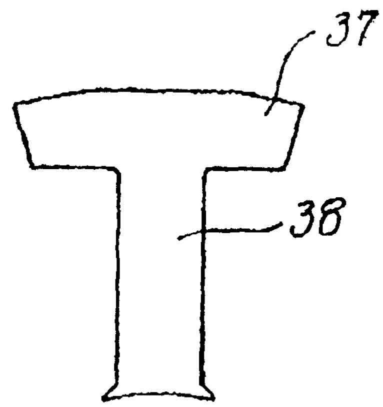

Fig. 7

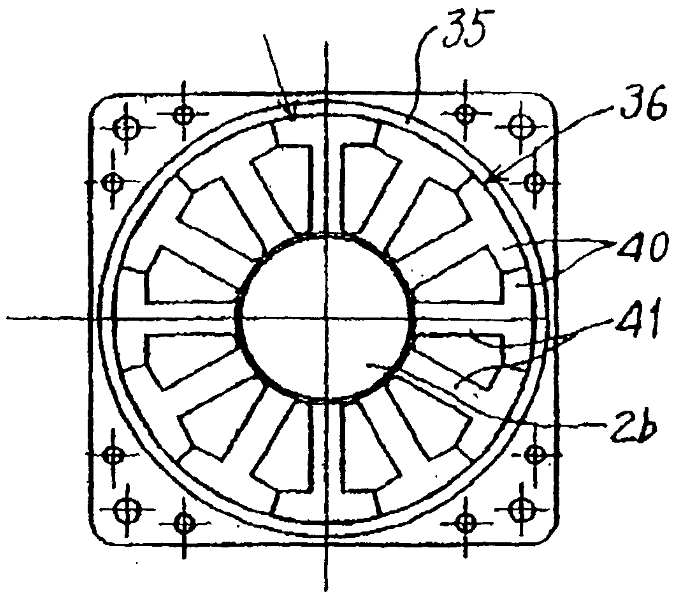


Fig. 8

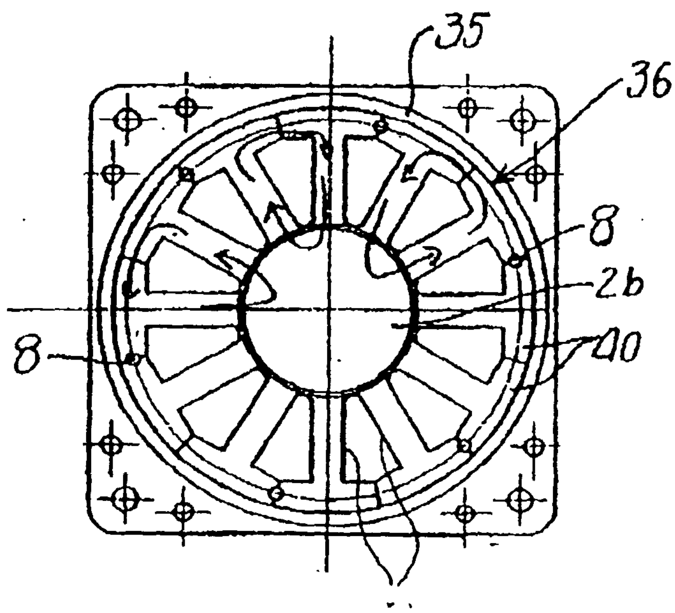

Fig. 9

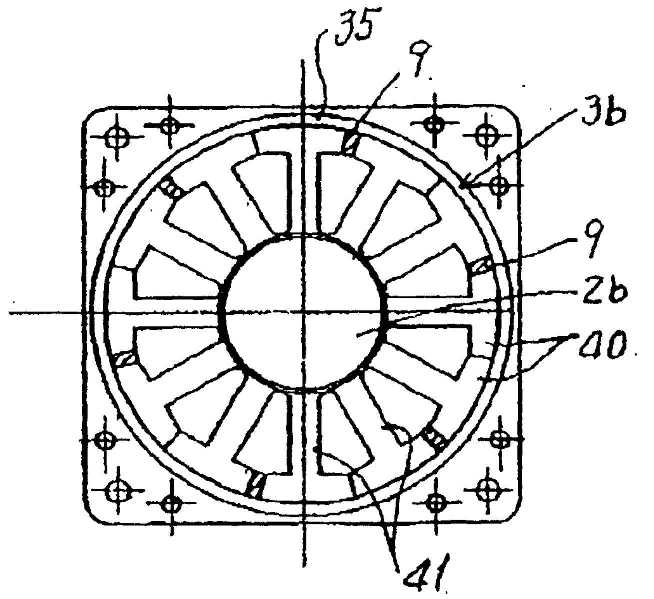


Fig. 10

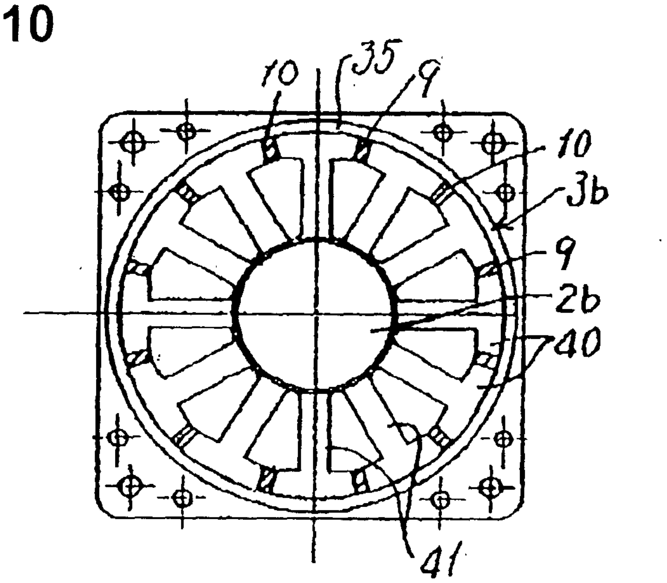

Fig. 11

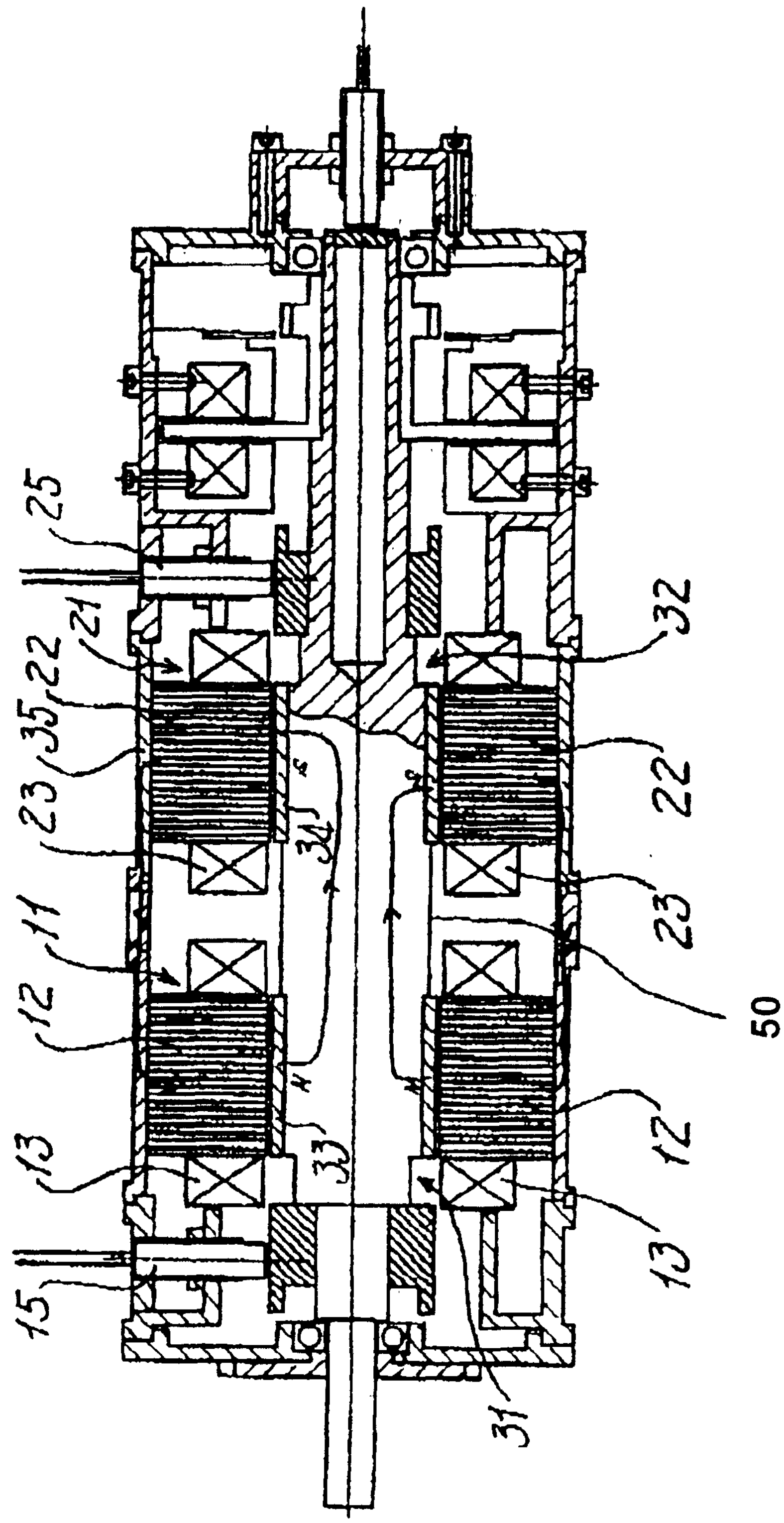

Fig. 12 (a)

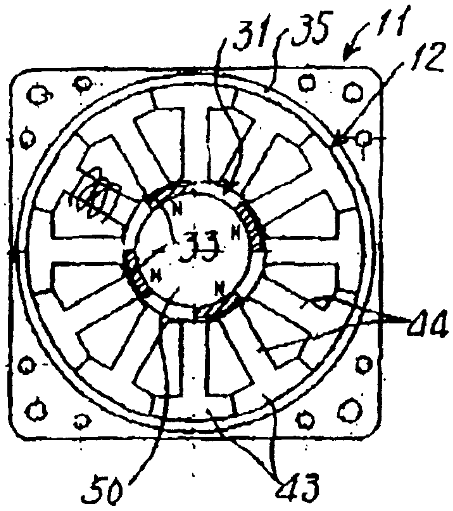


Fig. 12 (b)

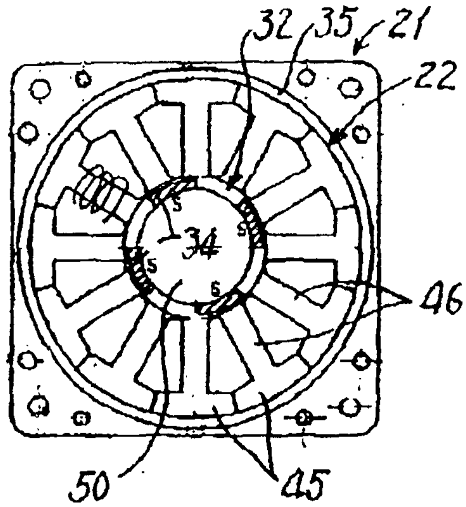


Fig. 13 (a)

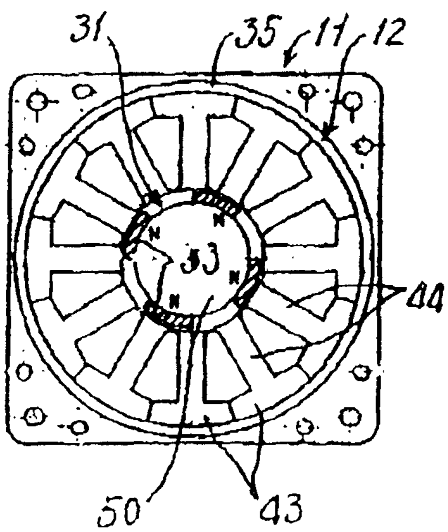


Fig. 13 (b)